# EUROPEAN PATENT SPECIFICATION

(11) **EP 4 040 109 B1**
(45) Date of publication and mention of the grant of the patent: **22.11.2023**
(21) Application number: 21154963.9
(22) Date of filing: 03.02.2021
(51) Int. Cl.: G01C 17/38

(54) **AUTOMATIC AND AUTONOMOUS CALIBRATION TRANSFER BETWEEN TWO DEVICES**
AUTOMATISCHE UND AUTONOME KALIBRIERUNGSÜBERTRAGUNG ZWISCHEN ZWEI VORRICHTUNGEN
TRANSFERT D'ÉTALONNAGE AUTOMATIQUE ET AUTONOME ENTRE DEUX DISPOSITIFS

(43) Date of publication of application: 10.08.2022
(73) Proprietor: Upteko ApS, 8660 Skanderborg (DK)
(72) Inventor: Duus, Sebastian, 8660 Skanderborg (DK); Tofterup, Vincent Klyverts, 8660 Skanderborg (DK); Breum, Per Bigum, 8660 Skanderborg (DK); Mejnertz, Benjamin, 8660 Skanderborg (DK); Jørgensen, Mads, 8660 Skanderborg (DK)
(74) Representative: Nordic Patent Service A/S

(56) References cited:
- WO-A1-2018/070103
- CN-A- 108 775 897
- CN-A- 111 307 135
- US-A1- 2016 327 389
- US-A1- 2018 112 980

## Description

### TECHNICAL FIELD

The disclosure relates to a compass calibration of an unmanned aerial vehicle and more particularly to a system, method and assembly for automatic and autonomous calibration of a compass of an unmanned aerial vehicle.

### BACKGROUND

Unmanned aerial vehicles (UAV) or commonly known as drones are aircrafts without a human pilot on board. UAVs normally comprise a ground-based controller and a communication system between the ground-based controller and the UAV flight systems. UAVs may be controlled by remote control by a human operator or autonomously by onboard computers (autopilots). UAVs can be categorised further based on functions, range/altitude, weight etc. but most UAVs generally have similar physical components, with the exception of the cockpit and environmental control or life support systems.

UAVs are equipped with a power supply source and an onboard computing system, which may be a System-on-a-Chip (SoC) or single-board computer (SBC) systems. The system hardware is often referred to as the Flight Controller (FC) or autopilot. UAVs also normally have sensors to provide information on the position and movement of the aircraft. These sensors may be inertial measurement units (IMUs), which typically combine the use of gyroscopes and accelerometers, with optional magnetometers included; the sensor equipment may also further comprise a compass, a barometer and GPS or GNSS receivers among others.

Calibration of these sensors is essential to ensure that the sensor and other instruments will produce accurate measurements pre-flight. By calibrating a drone or a controller, the errors caused by inaccurate sensor measurements are corrected to avoid in-flight issues and improve flight safety. Of these, the compass of a UAV is most likely to provide faulty measurements due to e.g. magnetic interference nearby (e.g. power lines or other electronics) or due to moving a UAV a large distance as the Earth's magnetic field changes depending on the location one is at.

Various methods exist for calibrating a compass or the sensors of a UAV. For hand-held UAVs this may be done by e.g. holding a drone in hand by an operator and rotating the drone around a 360-degree angle at various axes until the calibration software notifies the user of a successful calibration.

US20160327389A1 discloses a system to automatically calibrate a compass of an aerial vehicle, comprising a system configured to rotate a gimbal holding a camera, the gimbal being coupled with an aerial vehicle to calibrate a compass of the gimbal camera.

CN111307135A discloses an unmanned aerial vehicle compass error calibration device, comprising a base, adjusting seats rotationally arranged on the base, a first and second shaft to rotate the seat and a rotation driving mechanism for rotating the seats relative to the base.

US20160069681A1 discloses an automatic compass calibration system for calibrating compasses mounted on e.g. a deck or mast of moving structures such as vessels. The system may comprise one or more magnetometers, accelerometers, gyroscopes, a user interface, one or more sensors and/or actuators, a GPS system etc. and is adapted to measure local magnetic field.

None of these known systems or methods known to are able to calibrate a compass or other sensor of a UAV when the UAV itself is not suitable for movements normally needed for a calibration routine, such as when the UAV is too large for manual or automated rotations and is being transported on moving structures between geographical positions of considerable distances.

### SUMMARY

It is an object to provide a method, an apparatus and an assembly for calibrating a compass of an unmanned aerial vehicle that overcomes or at least reduces the problems mentioned above.

The foregoing and other objects are achieved by the features of the independent claims. Further implementation forms are apparent from the dependent claims, the description and the figures.

According to a first aspect, there is provided a stationary calibration unit for calibrating a compass of a flight controller in an unmanned aerial vehicle associated with the calibration unit to local Earth magnetic field without moving the compass move through a sequence of movements of a calibration routine, the stationary calibration unit comprising: a calibration controller; a calibration compass, the calibration compass being a duplicate of the compass of the flight controller of the unmanned aerial vehicle; an actuator operably coupled to the calibration compass; the calibration controller being configured to command the actuator to move the calibration compass through a sequence of movements of a calibration routine to calibrate the calibration compass relative to the local Earth magnetic field and thereby generate calibration parameters, the calibration controller being configured to record calibration parameters resulting from performing the calibration routine, and the calibration controller being configured to transmit the calibration parameters to the flight controller of the unmanned aerial vehicle, preferably via a data link.

By providing a calibration unit in the vicinity of the unmanned aerial vehicle and performing the calibration routine on a duplicate compass and duplicate flight controller rather than moving the unmanned aerial vehicle itself, it becomes possible to automatically, autonomously and more accurately calibrate the flight controller and compass of an unmanned aerial vehicle, as the obtained calibration parameters will be extremely accurate due to both the calibration unit and the unmanned aerial vehicle being in substantially the same geographical location, hence substantially the same local magnetic field. Further, as an automated actuator performs these routines, it can be ensured that the speed, direction, specific force, angular rate and orientation of the movement of the duplicate compass is more accurate than using e.g. a human operator to perform such moves, which may be prone to errors in performing such routines.

In a possible implementation form of the first aspect, the calibration controller is configured to determine whether the unmanned aerial vehicle is located within a pre-defined distance from the calibration unit or at a pre-defined location.

In a possible implementation form of the first aspect the stationary calibration unit is part of a charging station for charging a battery of the unmanned aerial vehicle or part of a docking station for docking the unmanned aerial vehicle.

By integrating a stationary calibration unit to a charging station or docking station it becomes possible to accurately re-calibrate the compass of an unmanned aerial device, while the unmanned aerial vehicle is parked or not in use due to e.g. charging, and ensures that the calibration of the compass is completed before the unmanned aerial vehicle is instructed to fly.

In a possible implementation form of the first aspect the calibration compass is arranged in a calibration flight controller that is a duplicate of the flight controller of the unmanned aerial vehicle.

By having a duplicate calibration compass, it becomes possible to perform a calibration routine by only moving the calibration unit, instead of having to move an unmanned aerial vehicle, which may be too heavy for manual rotation, e.g. military-grade unmanned aerial vehicles.

In a possible implementation form of the first aspect the compass is arranged in an inertial measurement unit of the flight controller of the unmanned aerial vehicle and the calibration compass is arranged in a calibration inertial measurement unit of the calibration flight controller of the calibration unit.

In a possible implementation form of the first aspect the calibration compass is part of a calibration flight controller that is a duplicate of the flight controller or is part of an inertial measurement unit that is part of a calibration flight controller that is a duplicate of the flight controller.

In a possible implementation form of the first aspect the inertial measurement unit that is part of a calibration flight controller comprises a magnetometer, an accelerometer and/or a gyroscope.

By having an inertial measurement unit, it becomes possible to integrate several components into one unit and to perform a calibration of a compass simultaneously with the calibration of other components that may be comprised in an inertial measurement unit.

In a possible implementation form of the first aspect the calibration unit further comprise a Global Navigation Satellite System (GNSS) receiver.

In a possible implementation form of the first aspect, the Global Navigation Satellite System receiver of the calibration unit is configured for the Global Positioning System (GPS), the Galileo positioning system, the GLONASS positioning system and/or the BeiDou positioning system.

In a possible implementation form of the first aspect the actuator comprises a kinematic chain of manipulators coupled via joints or linkages.

By providing an actuator with a chain of joints or linkages, it becomes possible to rotate the calibration compass so that it can detect the magnetic field intensity of Earth. Strong magnetic interference influences the reliability of compass readings, as compasses may erroneously point to the wrong direction. By rotating a calibration compass by an actuator comprising a kinematic chain of manipulators, the compass is able to judge the magnetic intensity in all directions and from this data is able to deduce the actual poles of the Earth.

In a possible implementation form of the first aspect the actuator comprises a gimbal.

In a possible implementation form of the first aspect the gimbal or the links of manipulators enable rotational and/or translational displacement of the calibration flight controller.

By rotating and/or by translationally displacing the calibration compass in a calibration flight controller it becomes possible to move the calibration compass around its principal rotational axes to detect the surrounding magnetic intensity in all directions and to be able to determine the poles of the Earth and consequently be able to provide accurate directions for a flight-path for an unmanned aerial vehicle.

In a possible implementation form of the first aspect the calibration routine comprises sequential rotation of the calibration compass around several axes.

In a possible implementation form of the first aspect the calibration controller is configured to obtain a current geographical position, preferably from a positioning system, more preferably from a global satellite navigation system.

In a possible implementation form of the first aspect the calibration controller is configured to determine the need for a calibration of the compass based on the current geographical position of the stationary calibration unit, preferably in comparison to a geographical position of a latest performed calibration routine.

In a possible implementation form of the first aspect, the data link is a wired or wireless data link.

According to a second aspect, there is a method for calibrating a compass of a flight controller of a parked unmanned aerial vehicle to local Earth magnetic field without moving the flight controller, the method comprising: providing a stationary calibration unit comprising a calibration compass, the calibration compass being a duplicate of the compass of the flight controller of the unmanned aerial vehicle; performing a calibration sequence by moving the calibration compass through a sequence of movements of a calibration routine; recording calibration parameters resulting from performing the calibration sequence in the local Earth magnetic field; and transmitting the recorded calibration parameters to the flight controller of the parked unmanned aerial vehicle, preferably via a data link.

By using a duplicate compass to calibrate the compass of an unmanned aerial vehicle through a sequence of movements to record calibration parameters, it becomes possible to remotely but directly calibrate the compass of an unmanned aerial vehicle without having to move the unmanned aerial vehicle itself.

In a possible implementation form of the second aspect the method comprising determining whether the unmanned aerial vehicle is located within a pre-defined distance from the calibration unit and performing a calibration of the compass without moving the compass through a sequence of movements of a calibration routine.

In a possible implementation form of the second aspect the method comprising applying the reported calibration parameters to the compass in the unmanned aerial vehicle.

In a possible implementation form of the second aspect the method further comprising calibrating an inertial measurement unit that is part of the flight controller, using a calibration inertial measurement unit that is part of the calibration flight controller that is a duplicate of the flight controller, for simultaneous calibration by the calibration controller with the calibration compass.

In a possible implementation form of the second aspect the method comprising determining whether there is a need for a calibration of the compass comprises determining the current geographical position of the calibration unit and comparing the current geographical position with the geographical position of the last performed calibration sequence.

In a possible implementation form of the second aspect, the method comprising determining the geographical distance between the current geographical position and the geographical position of the last performed calibration sequence, and initiating a calibration sequence when the geographical distance exceeds a threshold.

By setting a threshold for geographical distance it becomes possible to automatically and autonomously calibrate a compass of an unmanned aerial vehicle when the need for a calibration becomes apparent.

According to a third aspect, there is provided assembly comprising a stationary calibration unit and an unmanned aerial vehicle having a flight controller comprising a compass.

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1a is an exemplary side view assembly of the apparatus on a moving vehicle and an unmanned aerial vehicle in accordance with an embodiment;
Fig. 1b is an exemplary side view assembly of the apparatus on a moving vehicle and an unmanned aerial vehicle in accordance with an embodiment;
Fig. 2 is a diagrammatic representation of the apparatus and an unmanned aerial vehicle in accordance with an embodiment;
Fig. 3 is a diagrammatic representation of the apparatus and an unmanned aerial vehicle in accordance with an embodiment;
Fig. 4 is a diagrammatic representation of the apparatus in accordance with an embodiment;
Fig. 5 shows a possible configuration of the calibration unit and actuator in accordance with an embodiment;
Fig. 6 is a flow-chart overview of the method for calibrating the compass of an unmanned aerial vehicle.

### DETAILED DESCRIPTION

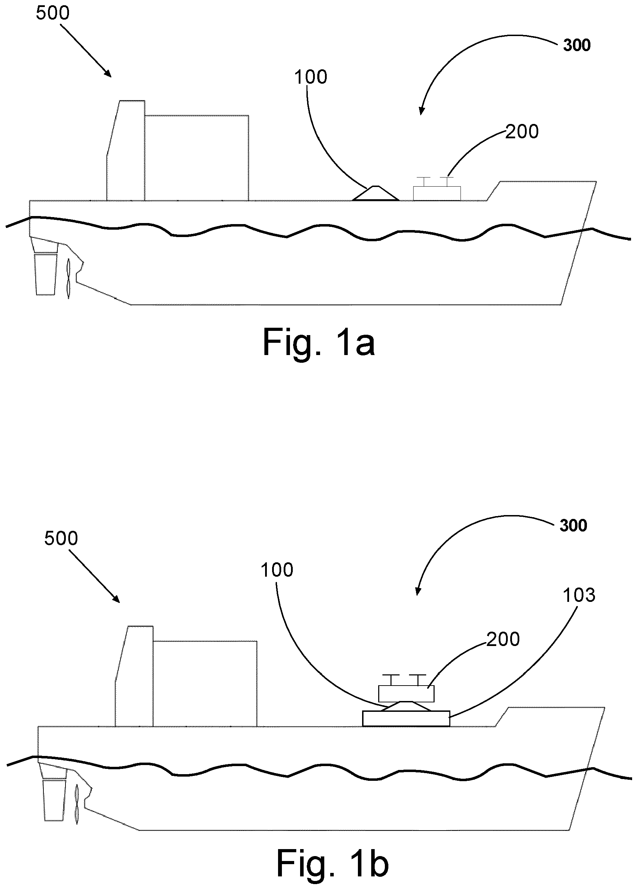

Fig. 1a illustrates an assembly 300 of a calibration unit 100 and an unmanned aerial vehicle (UAV) 200 according to an exemplary embodiment of the present disclosure, arranged on a moving vehicle 500.

Unmanned aerial vehicles (UAVs) 200 are often transported across the globe e.g. for military purposes or for other types of work or pleasure on board of a moving structure 500. The UAV 200 is often large and heavy and may also be parked on deck of a moving structure 500. According to the present disclosure, a stationary calibration unit 100 is placed in the vicinity of the UAV 200 to allow data communication between the calibration unit 100 and the computer system of UAV 200.

According to an embodiment, the calibration unit 100 is arranged within a pre-defined distance from the UAV 200. By placing a calibration unit 100 in the close vicinity of the UAV 200 it can be ensured that the local Earth magnetic field that the calibration unit 100 detects is the same as, or within an allowable error margin of the local Earth magnetic field the UAV 200 is exposed to. This leads to highly accurate measurements, allowing a direct data transfer of the calibration parameters for immediate use for an UAV 200. Further, the magnetic interference from nearby devices or structures will have the same effect on the calibration unit 100 as on the UAV 200, ensuring that the measurements performed on the calibration unit 100 are directly usable for calibrating a compass or other sensor of a UAV 200.

Fig. 1b shows an alternative placement of the calibration unit 100 in accordance with another embodiment. According to this embodiment, the calibration unit 100 may be a part of a docking station 103 for docking an UAV, or part of a charging station 103 for charging a battery or batteries of an UAV 200. When the UAV 200 is parked for storage or charging on a moving structure 500, it may be placed e.g. on the deck of a moving structure 500. This configuration allows for compact storage of the calibration unit 100. A further advantage of the calibration unit 100 being incorporated into a docking or charging station 103 is that the UAV 200 may be calibrated immediately during or shortly after storage or charging, thereby allowing a much faster deployment of the UAV 200.

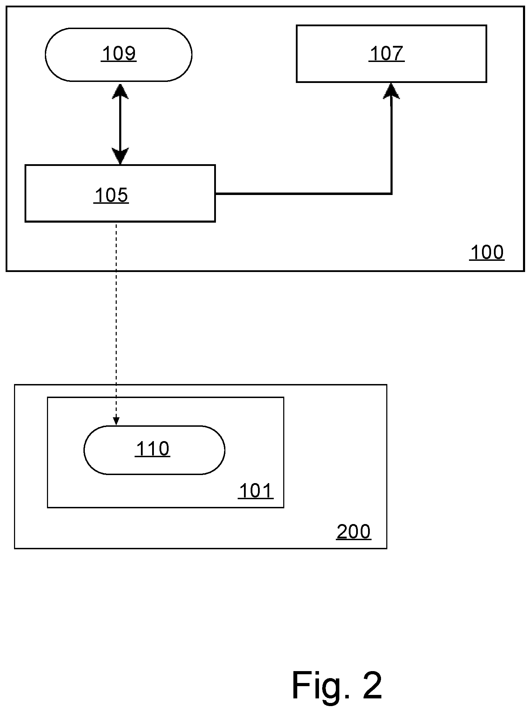

Fig. 2 illustrates the calibration unit 100. The calibration unit comprises a calibration controller 105, a calibration compass 109 and an actuator 107. The calibration controller 105 is configured to determine whether the UAV 200 is located within a pre-defined distance from the calibration unit 100 and is also configured to determine the need for a calibration. The actuator 107 is operably coupled to the calibration compass 109 and the calibration compass 109 is the duplicate of the flight controller 101 of the UAV 200. The calibration controller is also configured to command the actuator 107 to move the calibration compass 109 through a sequence of movements to perform a calibration routine. The calibration controller 105 may record the calibration parameters obtained from performing a calibration routine and is also configured to transmit the calibration parameters to the flight controller 101 of a UAV 200.

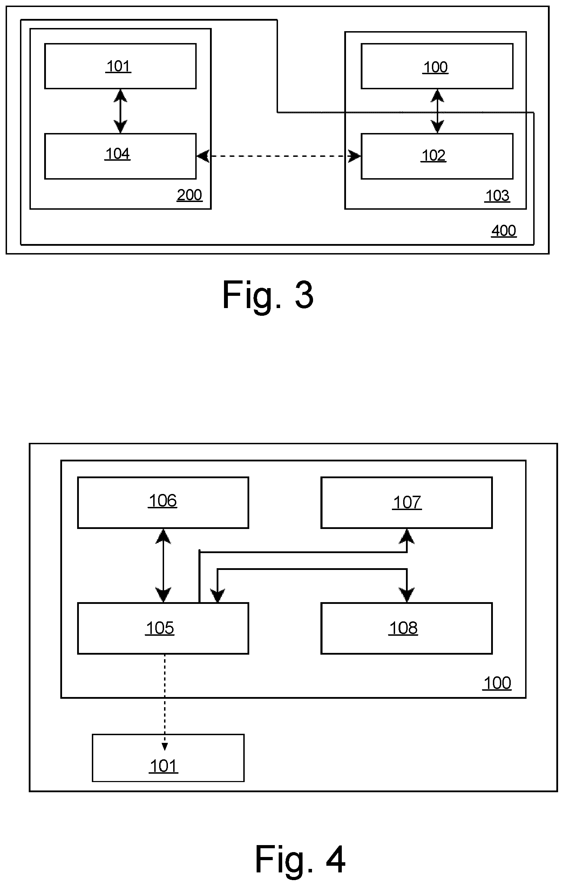

Fig. 3 illustrates the relationship between a UAV 200 and the calibration unit 100 according to an embodiment.

According to this embodiment, the UAV 200 comprises a controller 104 and a flight controller 101 in communication with each other. The controller 104 of a UAV 200 is normally an in-built controller or microcontroller, such as an onboard computer configured to pilot the UAV 200 and is configured to compute all onboard calculations necessary for a safe flight.

The flight controller 101 of a UAV 200 may be a System-on-a-Chip (SoC) or a Single-board computer (SBC), but other suitable computational systems may be used. The flight controller 101 may be implemented as a circuit board. The flight controller 101 of the UAV 200 comprises e.g. a compass 110 or magnetometer, and may comprise other sensors, such as an inertial measurement unit for obtaining positional and movement data pre-, in- and post-flight. The flight controller 101 transmits the obtained parameters to the controller 104, which parameters are also used by the controller 104 for directing the RPM of each motor arranged on the UAV 200 in response to an input command from the flight controller 101. According to an embodiment, associated with the UAV 200 there is provided a charging or docking station 103 which is configured to supply power to the UAV 200 when the UAV 200 is not in use. The power may be supplied via wired or wireless means and may be e.g. a conventional computer bus and power connection or other suitable means.

As illustrated in Fig. 3, a ground control station 102 may also be arranged within the charging or docking station 103. The ground control station 102 is generally responsible for facilitating human control of UAVs, comprising a set of ground-based hardware systems used to control the UAV 200. There may be e.g. a Human-Machine Interface, computers, telemetry, video capture card and aerials for the control, and video and data links to the UAV 200. The ground control station 102 may already have a pre-existing wireless link to the UAV 200 which may be utilized by the calibration unit 100 for transmitting data, such as calibration parameters resulting from performing a calibration routine. The calibration unit 100 may also directly transmit data to the flight controller 101 of the UAV 200 directly, via a wired or wireless connection.

The calibration unit 100 according to an embodiment may retrofitted into an existing charging or docking station 103 and may in connection with the ground control station 102. The calibration unit 100 may be powered from the same source as the UAV 200 via wired or wireless means. The calibration unit 100 may also be incorporated to be a part of a charging or docking station 103 available on board of e.g. a moving structure 500.

Fig. 4 illustrates the calibration unit 100 according to an embodiment of the present disclosure.

The calibration unit 100 in this embodiment comprises a calibration controller 105, a calibration flight controller 106, an actuator 107 and a Global Navigation Satellite System (GNSS) receiver 108.

The Global Navigation Satellite System (GNSS) receiver 108 is configured for receiving satellite information from a global satellite navigation system. If the GNSS receiver is configured to operate with more than one satellite navigation system, it may in an embodiment be configured to use the system with the best coverage in the geographical position of the calibration unit 100. In an embodiment the GNNS receiver 108 is configured to receive satellite information from the Global Positioning System (GPS), the Galileo satellite system, the GLONASS satellite system and/ or the BeiDou satellite system.

The GNSS receiver 108 is configured to obtain a current geographical position of the calibration unit 100, and consequently, to obtain a current geographical location of a UAV 200 associated with the calibration unit 100. The GNSS receiver 108 may be a positioning system receiver, more preferably from a satellite navigation system. The GNNS receiver 108 is in communication with the calibration controller 105 and transmits geographical positional data to the calibration controller 105 for determining the need for a new calibration.

The calibration controller 105 is configured to handle the mathematical and computational calculations associated with a calibration. The calibration controller 105 may be a System-on-a Chip or a Single-board computer (SBC), but any other suitable computational system may be used. The calibration controller 105 is in communication with the calibration flight controller 106 and the GNSS receiver 108 and controls the movement sequence of the actuator 107. The calibration controller 105 may also comprise a memory unit for storing previous calibration values and calibration timestamps.

The calibration controller 105 is configured to determine whether a new calibration is needed and may be configured to obtain data from the GNSS receiver 108 to determine the current geographical location of the calibration unit 100 which, in case the UAV 200 is located within a predefined distance, is also the current geographical location of the UAV 200. The calibration controller 105 is also able to store and compute data stored in its memory and compare e.g. the obtained current geographical location data to previously recorded geographical location data. The calibration controller 105 is configured to initiate and control the movement of the actuator 107 via a pre-determined calibration sequence designed to calibrate the compass of a flight controller 106 or other sensors of a UAV 200, thereby moving or rotating a duplicate or copy of the UAV 200 flight controller 105, such as a calibration flight controller 106 comprising a calibration compass 109.

The calibration controller 105 may also be able to receive data from the calibration flight controller 106. The calibration controller 105 may also be able to transmit data received and/or calculated to the flight controller 101 of a UAV 200.

As mentioned before, the calibration flight controller 106 may comprise a calibration compass 109 which is a duplicate or copy of the compass 100 of a flight controller 101 of a UAV 200. The calibration compass 109 may be e.g. a gyrocompass or a GPS-GNSS receiver used as a compass. The GPS-GNSS receiver data may be blended with data from an inertial measurement unit and therefore may achieve high accuracy in seconds.

The calibration flight controller 106 may be configured to collect data related to its position and movement so that the compass 109 and other sensors are calibrated. As the calibration flight controller 106 is placed in the close vicinity of the UAV 200 as part of the calibration unit 100, it can be ensured that the positional and movement data collected on the calibration flight controller 106 will match the data that would be collected by the UAV 200 if the UAV 200 would directly be calibrated by moving the UAV 200 itself through a calibration sequence, however it has the advantage that the UAV 200 need not be physically moved in order to collect calibration parameters that are directly usable by the UAV 200.

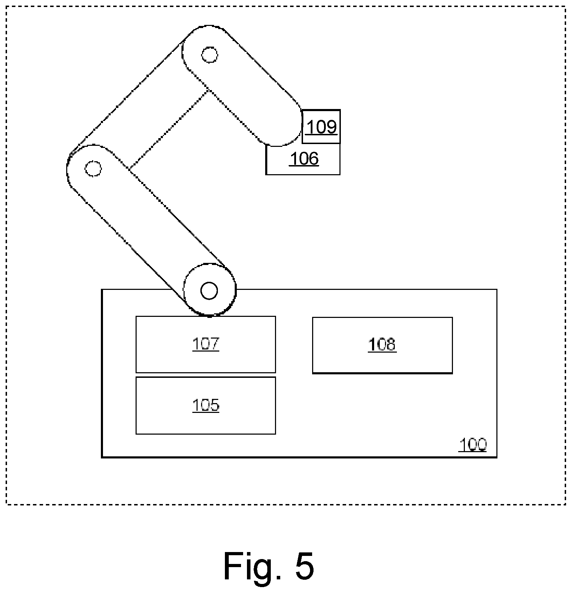

As illustrated in Fig. 5, the calibration flight controller 106 is in physical contact with the distal end of the actuator 107, allowing the actuator 107 to move the calibration flight controller 106 so as to calibrate the sensors and calibration compass 109 of the flight controller 106.

The calibration controller 105 is also configured to control the movement and sequence of the actuator 107. The actuator 107 is configured to securely hold and move the flight controller 106 via a pre-determined sequence controlled by the calibration controller 105. The actuator 107 may comprise a kinematic chain of manipulators coupled via joints or linkages. The actuator 107 may comprise a gimbal to move the flight controller 106. The actuator 107 may be constructed so that it is able to perform rotations around the several axes (commonly denoted as x, y and z axes) so that the flight controller 106 and calibration compass 109 is able to sense and measure the Earth's magnetic field in all directions to be able to precisely determine cardinal directions. An actuator 107 may also be a robotic arm, or any suitable chains coupled via joints or linkages for rotating around various axes.

The actuator 107, is configured to move the flight controller 106 in a pre-determined sequence, which may include rotations, translational displacement or other, suitable calibration movements. The movement of the actuator 107 and the calibration routine performed is controlled by the calibration controller 105. The actuator 107 may e.g. extend from the base of the calibration unit 100 as e.g. a robotic arm, or, as illustrated in Fig. 5, or it may also be comprised within a calibration unit 100, hence rendering the actuator 107 invisible for an observer.

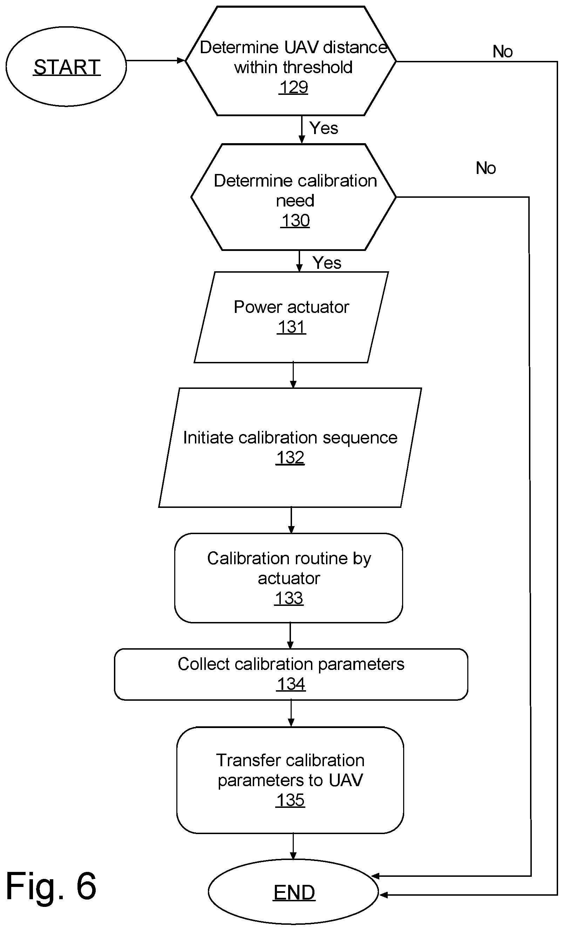

Fig. 6 is shows flow-chart overview of the method for calibrating the compass of an unmanned aerial vehicle.

First, the calibration controller 105 of the calibration unit 100 determines if the UAV 200 is located within a distance threshold (step 129). If the distance of the UAV 200 and the calibration unit 100 is outside of a suitable calibration distance (i.e. the controller 101 of the UAV 200 and the calibration controller 105 of the calibration unit 100 cannot communicate with each other), the calibration is stopped and no calibration routine will be performed.

If the UAV 200 is positioned within a suitable calibration distance threshold, the calibration controller 105 determines the need for a calibration (step 130). For this step, the calibration controller 105 may obtain the current geographical position from e.g. a GNSS receiver 108 and compare this current geographical position to a geographical position of a latest performed calibration route. If the distance between the two geographical positions exceeds a threshold, the calibration controller 105 signals to initiate the calibration routine, otherwise, if the distance is outside a threshold, the calibration is concluded. The distance between the two geographical position may be e.g. 1 to 10 km (e.g. in abnormal magnetic areas) or may be up to 100 to 300 km depending on magnetic declination and/or local geographical time and/or position. The distance threshold is irregularly distributed throughout the globe but is easily determined when initiating the calibration.

Once the calibration is initiated, the calibration controller 105 powers up the actuator 107 (step 131 to step 132) to initiate the calibration sequence. The actuator 107 will rotate and/or translationally displace the calibration flight controller 106 coupled with the actuator 107 so that positional and movement data can be recorded.

The calibration flight controller 106 collects and transmits the recorded calibration parameters to the calibration controller 105 which, upon recordal of this data transfers the calibration parameters to the UAV 200. The calibration is then concluded until a next calibration is started.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. A stationary calibration unit (100) for calibrating a compass (110) of a flight controller (101) in an unmanned aerial vehicle (200) associated with said calibration unit (100) to local Earth magnetic field without moving said compass (110) through a sequence of movements of a calibration routine, said stationary calibration unit (100) comprising:
a calibration controller (105);
a calibration compass (109), said calibration compass (109) being a duplicate of said compass (110) of said flight controller (101) of said unmanned aerial vehicle (200); and
an actuator (107) operably coupled to said calibration compass (109);
said calibration controller (105) being configured to command said actuator (107) to move said calibration compass (109) through a sequence of movements of a calibration routine to calibrate said calibration compass (109) relative to the local Earth magnetic field and thereby generate calibration parameters,
said calibration controller (105) being configured to record calibration parameters resulting from performing said calibration routine, and
said calibration controller (105) being configured to transmit said calibration parameters to said flight controller (101) of said unmanned aerial vehicle (200), preferably via a data link.

2. The statutory calibration unit (100) according to claim 1, wherein said calibration controller (105) is configured to determine whether said unmanned aerial vehicle (200) is located within a pre-defined distance from said calibration unit (100) or at a pre-defined location.

3. The stationary calibration unit (100) according to claim 1 or 2, that is part of a charging station (103) for charging a battery of said unmanned aerial vehicle (200) and/or part of a docking station (103) for docking said unmanned aerial vehicle (200).

4. The stationary calibration unit (100) according to any one of claims 1 to 3, wherein said calibration compass (109) is arranged in a calibration flight controller (106) that is a duplicate of said flight controller (101) of said unmanned aerial vehicle (200).

5. The stationary calibration unit (100) according to any one of the preceding claims, wherein said compass (110) is arranged in an inertial measurement unit of said flight controller (101) of said unmanned aerial vehicle (200) and said calibration compass (109) is arranged in a calibration inertial measurement unit of said calibration flight controller (106) of said calibration unit (100) and or wherein said calibration compass (109) is part of a calibration flight controller (106) that is a duplicate of said flight controller (101) or is part of an inertial measurement unit that is part of a calibration flight controller (106) that is a duplicate of said flight controller (101).

6. The stationary calibration unit (100) according to any one of the preceding claims, wherein said actuator (107) comprises a kinematic chain of manipulators coupled via joints or linkages and/or wherein said actuator (107) comprises a gimbal and/or wherein said gimbal or said links of manipulators enable rotational and/or translational displacement of said calibration flight controller (106).

7. The stationary calibration unit according to any one of the preceding claims, wherein said calibration routine comprises sequential rotation of said calibration compass (109) around several axes.

8. A stationary calibration unit according to any one of the preceding claims, wherein said calibration controller (105) is configured to obtain a current geographical position, preferably from a positioning system (108), more preferably from a global satellite navigation system (108).

9. A stationary calibration unit (100) according to claim 1 to 8, wherein said calibration controller (105) is configured to determine the need for a calibration of said compass (110) based on the current geographical position of the stationary calibration unit, preferably in comparison to a geographical position of a latest performed calibration routine.

10. A method for calibrating a compass (110) of a flight controller (101) of a parked unmanned aerial vehicle (200) to local Earth magnetic field without moving said flight controller (101), said method comprising:
providing a stationary calibration unit (100) comprising a calibration compass (109), said calibration compass (109) being a duplicate of said compass (110) of said flight controller (101) of said unmanned aerial vehicle (200);
performing a calibration sequence by moving said calibration compass (109) through a sequence of movements of a calibration routine;
recording calibration parameters resulting from performing said calibration sequence in the local Earth magnetic field;
and
transmitting said recorded calibration parameters to said flight controller (101) of said parked unmanned aerial vehicle (200), preferably via a data link.

11. A method according to claim 10, comprising determining whether said unmanned aerial vehicle (200) is located within a pre-defined distance from said calibration unit (100) and performing a calibration of said compass (110) without moving said compass (110) through a sequence of movements of a calibration routine, preferably comprising applying the reported calibration parameters to said compass (110) in said unmanned aerial vehicle (200).

12. The method according to claim 10 or 11, further comprising calibrating an inertial measurement unit that is part of said flight controller (101), using a calibration inertial measurement unit that is part of said calibration flight controller (106) that is a duplicate of said flight controller (101), for simultaneous calibration by said calibration controller (105) with said calibration compass (109).

13. The method according to any one of claims 10 to 12, wherein determining whether there is a need for a calibration of said compass (110) comprises determining the current geographical position of said calibration unit and comparing said current geographical position with the geographical position of the last performed calibration sequence.

14. The method according to claim 13, comprising determining the geographical distance between said current geographical position and said geographical position of said last performed calibration sequence, and initiating a calibration sequence when said geographical distance exceeds a threshold.

15. An assembly (300) comprising a stationary calibration unit (100) according to any one of claims 1 to 9, and an unmanned aerial vehicle (200) having a flight controller (101) comprising a compass (110).

## Patentansprüche

1. Stationäre Kalibrierungseinheit (100) zum Kalibrieren eines Kompasses (110) einer Flugsteuerung (101) in einem unbemannten Luftfahrzeug (200), das mit der Kalibrierungseinheit (100) verknüpft ist, auf das örtliche Erdmagnetfeld, ohne den Kompass (110) durch eine Abfolge von Bewegungen einer Kalibrierungsroutine zu bewegen, wobei die stationäre Kalibrierungseinheit (100) Folgendes umfasst:
eine Kalibrierungssteuerung (105),
einen Kalibrierungskompass (109), wobei der Kalibrierungskompass (109) ein Duplikat des Kompasses (110) der Flugsteuerung (101) des unbemannten Luftfahrzeugs (200) ist, und
einen Stellantrieb (107), der wirksam mit dem Kalibrierungskompass (109) gekoppelt ist,
wobei die Kalibrierungssteuerung (105) dafür konfiguriert ist, den Stellantrieb (107) anzuweisen, den Kalibrierungskompass (109) durch eine Abfolge von Bewegungen einer Kalibrierungsroutine zu bewegen, um den Kalibrierungskompass (109) im Verhältnis zu dem örtlichen Erdmagnetfeld zu kalibrieren, und dadurch Kalibrierungsparameter zu erzeugen,
wobei die Kalibrierungssteuerung (105) dafür konfiguriert ist, Kalibrierungsparameter aufzuzeichnen, die sich aus dem Durchführen der Kalibrierungsroutine ergeben, und
wobei die Kalibrierungssteuerung (105) dafür konfiguriert ist, die Kalibrierungsparameter an die Flugsteuerung (101) des unbemannten Luftfahrzeugs (200) zu übermitteln, vorzugsweise über eine Datenverbindung.

2. Stationäre Kalibrierungseinheit (100) nach Anspruch 1, wobei die Kalibrierungssteuerung (105) dafür konfiguriert ist, festzustellen, ob sich das unbemannte Luftfahrzeug (200) innerhalb einer vordefinierten Entfernung von der Kalibrierungseinheit (100) oder an einer vordefinierten Position befindet.

3. Stationäre Kalibrierungseinheit (100) nach Anspruch 1 oder 2, die ein Teil einer Ladestation (103) zum Laden einer Batterie des unbemannten Luftfahrzeugs (200) und/oder ein Teil einer Docking-Station (103) zum Andocken des unbemannten Luftfahrzeugs (200) ist.

4. Stationäre Kalibrierungseinheit (100) nach einem der Ansprüche 1 bis 3, wobei der Kalibrierungskompass (109) in einer Kalibrierungsflugsteuerung (106) angeordnet ist, die ein Duplikat der Flugsteuerung (101) des unbemannten Luftfahrzeugs (200) ist.

5. Stationäre Kalibrierungseinheit (100) nach einem der vorhergehenden Ansprüche, wobei der Kompass (110) in einer inertialen Messeinheit der Flugsteuerung (101) des unbemannten Luftfahrzeugs (200) angeordnet ist und der Kalibrierungskompass (109) in einer inertialen Kalibrierungsmesseinheit der Kalibrierungsflugsteuerung (106) der Kalibrierungseinheit (100) angeordnet ist und/oder wobei der Kalibrierungskompass (109) ein Teil einer Kalibrierungsflugsteuerung (106) ist, die ein Duplikat der Flugsteuerung (101) ist, oder ein Teil einer inertialen Messeinheit ist, die ein Teil einer Kalibrierungsflugsteuerung (106) ist, die ein Duplikat der Flugsteuerung (101) ist.

6. Stationäre Kalibrierungseinheit (100) nach einem der vorhergehenden Ansprüche, wobei der Stellantrieb (107) eine kinematische Kette von Manipulatoren umfasst, die über Gelenke oder Verknüpfungen gekoppelt sind, und/oder wobei der Stellantrieb (107) eine kardanische Aufhängung umfasst und/oder wobei die kardanische Aufhängung oder die Verknüpfungen von Manipulatoren eine Rotations- und/oder Translationsverschiebung der Kalibrierungsflugsteuerung (106) ermöglichen.

7. Stationäre Kalibrierungseinheit nach einem der vorhergehenden Ansprüche, wobei die Kalibrierungsroutine eine aufeinanderfolgende Drehung des Kalibrierungskompasses (109) um mehrere Achsen umfasst.

8. Stationäre Kalibrierungseinheit nach einem der vorhergehenden Ansprüche, wobei die Kalibrierungssteuerung (105) dafür konfiguriert ist, eine aktuelle geographische Position zu gewinnen, vorzugsweise von einem Positionierungssystem (108), insbesondere von einem globalen Satellitennavigationssystem (108).

9. Stationäre Kalibrierungseinheit (100) nach Anspruch 1 bis 8, wobei die Kalibrierungssteuerung (105) dafür konfiguriert ist, die Notwendigkeit einer Kalibrierung des Kompasses (110) auf Grundlage der aktuellen geographischen Position der stationären Kalibrierungseinheit festzustellen, vorzugsweise im Vergleich mit einer geographischen Position einer zuletzt durchgeführten Kalibrierungsroutine.

10. Verfahren zum Kalibrieren eines Kompasses (110) einer Flugsteuerung (101) eines geparkten unbemannten Luftfahrzeugs (200) auf das örtliche Erdmagnetfeld, ohne die Flugsteuerung (101) zu bewegen, wobei das Verfahren Folgendes umfasst:
Bereitstellen einer stationären Kalibrierungseinheit (100), die einen Kalibrierungskompass (109) umfasst, wobei der Kalibrierungskompass (109) ein Duplikat des Kompasses (110) der Flugsteuerung (101) des unbemannten Luftfahrzeugs (200) ist,
Durchführen einer Kalibrierungssequenz durch Bewegen des Kalibrierungskompasses (109) durch eine Abfolge von Bewegungen einer Kalibrierungsroutine,
Aufzeichnen von Kalibrierungsparametern, die sich aus dem Durchführen der Kalibrierungssequenz in dem örtlichen Erdmagnetfeld ergeben,
und
Übermitteln der aufgezeichneten Kalibrierungsparameter an die Flugsteuerung (101) des geparkten unbemannten Luftfahrzeugs (200), vorzugsweise über eine Datenverbindung.

11. Verfahren nach Anspruch 10, umfassend das Feststellen, ob sich das unbemannte Luftfahrzeug (200) innerhalb einer vordefinierten Entfernung von der Kalibrierungseinheit (100) befindet, und das Durchführen einer Kalibrierung des Kompasses (110), ohne den Kompass (110) durch eine Abfolge von Bewegungen einer Kalibrierungsroutine zu bewegen, vorzugsweise umfassend das Anwenden der gemeldeten Kalibrierungsparameter auf den Kompass (110) in dem unbemannten Luftfahrzeug (200).

12. Verfahren nach Anspruch 10 oder 11, ferner umfassend das Kalibrieren einer inertialen Messeinheit, die ein Teil der Flugsteuerung (101) ist, unter Verwendung einer inertialen Kalibrierungsmesseinheit, die ein Teil der Kalibrierungsflugsteuerung (106) ist, die ein Duplikat der Flugsteuerung (101) ist, zur gleichzeitigen Kalibrierung durch die Kalibrierungssteuerung (105) mit dem Kalibrierungskompass (109) .

13. Verfahren nach einem der Ansprüche 10 bis 12, wobei das Feststellen, ob es eine Notwendigkeit einer Kalibrierung des Kompasses (110) gibt, das Feststellen der aktuellen geographischen Position der Kalibrierungseinheit und das Vergleichen der aktuellen geographischen Position mit der geographischen Position der zuletzt durchgeführten Kalibrierungssequenz umfasst.

14. Verfahren nach Anspruch 13, umfassend das Feststellen der geographischen Entfernung zwischen der aktuellen geographischen Position und der geographischen Position der zuletzt durchgeführten Kalibrierungssequenz und das Einleiten einer Kalibrierungssequenz, wenn die geographische Entfernung einen Schwellenwert überschreitet.

15. Baugruppe (300), umfassend eine stationäre Kalibrierungseinheit (100) nach einem der Ansprüche 1 bis 9 und ein unbemanntes Luftfahrzeug (200), das eine Flugsteuerung (101) aufweist, die einen Kompass (110) umfasst.

## Revendications

1. Unité d'étalonnage fixe (100) pour étalonner un compas (110) d'une commande de vol (101) dans un véhicule aérien non habité (200) associé avec ladite unité d'étalonnage (100) au champ magnétique terrestre local sans déplacer ledit compas (110) par une séquence de mouvements d'une routine d'étalonnage, ladite unité d'étalonnage fixe (100) comprenant :
une commande d'étalonnage (105) ;
un compas d'étalonnage (109), ledit compas d'étalonnage (109) étant un double dudit compas (110) de ladite commande de vol (101) dudit véhicule aérien non habité (200) ; et
un actionneur (107) couplé de manière fonctionnelle audit compas d'étalonnage (109) ;
ladite commande d'étalonnage (105) étant configurée pour commander ledit actionneur (107) à déplacer ledit compas d'étalonnage (109) par une séquence de mouvements d'une routine d'étalonnage pour étalonner ledit compas d'étalonnage (109) par rapport au champ magnétique terrestre local et générer ainsi des paramètres d'étalonnage,
ladite commande d'étalonnage (105) étant configurée pour enregistrer des paramètres d'étalonnage résultant de l'exécution de ladite routine d'étalonnage, et
ladite commande d'étalonnage (105) étant configurée pour transmettre lesdits paramètres d'étalonnage à ladite commande de vol (101) dudit véhicule aérien non habité (200), de préférence par un lien de données.

2. Unité d'étalonnage fixe (100) selon la revendication 1, dans laquelle ladite commande d'étalonnage (105) est configurée pour déterminer si ledit véhicule aérien non habité (200) est situé dans une distance pré-définie de ladite unité d'étalonnage (100) ou à un emplacement pré-défini.

3. Unité d'étalonnage fixe (100) selon la revendication 1 ou 2, qui fait partie d'une station de chargement (103) pour charger une batterie dudit véhicule aérien non habité (200) et/ou fait partie d'une station d'amarrage (103) pour amarrer ledit véhicule aérien non habité (200).

4. Unité d'étalonnage fixe (100) selon l'une quelconque des revendications 1 à 3, dans laquelle ledit compas d'étalonnage (109) est agencé dans une commande de vol d'étalonnage (106) qui est un double de ladite commande de vol (101) dudit véhicule aérien non habité (200).

5. Unité d'étalonnage fixe (100) selon l'une quelconque des revendications précédentes, dans laquelle ledit compas (110) est agencé dans une unité de mesure inertielle de ladite commande de vol (101) dudit véhicule aérien non habité (200) et ledit compas d'étalonnage (109) est agencé dans une unité de mesure inertielle d'étalonnage de ladite commande de vol d'étalonnage (106) de ladite unité d'étalonnage (100) et/ou dans laquelle ledit compas d'étalonnage (109) fait partie d'une commande de vol d'étalonnage (106) qui est un double de ladite commande de vol (101) ou fait partie d'une unité de mesure inertielle qui fait partie d'une commande de vol d'étalonnage (106) qui est un double de ladite commande de vol (101).

6. Unité d'étalonnage fixe (100) selon l'une quelconque des revendications précédentes, dans laquelle ledit actionneur (107) comprend une chaîne cinématique de manipulateurs couplés par des articulations ou des attelages et/ou dans laquelle ledit actionneur (107) comprend un cardan et/ou dans laquelle ledit cardan ou lesdits liens de manipulateurs permettent le déplacement en rotation et/ou translation de ladite commande de vol d'étalonnage (106).

7. Unité d'étalonnage fixe selon l'une quelconque des revendications précédentes, dans laquelle ladite routine d'étalonnage comprend la rotation séquentielle dudit compas d'étalonnage (109) sur plusieurs axes.

8. Unité d'étalonnage fixe selon l'une quelconque des revendications précédentes, dans laquelle ladite commande d'étalonnage (105) est configurée pour obtenir une position géographique actuelle, de préférence d'un système de positionnement (108), de manière plus préférée d'un système mondial de navigation par satellite (108).

9. Unité d'étalonnage fixe (100) selon les revendications 1 à 8, dans laquelle ladite commande d'étalonnage (105) est configurée pour déterminer le besoin d'étalonnage dudit compas (110) en se basant sur la position géographique actuelle de l'unité d'étalonnage fixe, de préférence en comparaison avec une position géographique d'une routine d'étalonnage exécutée en dernier.

10. Procédé d'étalonnage d'un compas (110) d'une commande de vol (101) d'un véhicule aérien non habité stationné (200) au champ magnétique terrestre local sans déplacer ladite commande de vol (101), ledit procédé comprenant :
de fournir une unité d'étalonnage fixe (100) comprenant un compas d'étalonnage (109), ledit compas d'étalonnage (109) étant un double dudit compas (110) de ladite commande de vol (101) dudit véhicule aérien non habité (200) ;
d'effectuer une séquence d'étalonnage en déplaçant ledit compas d'étalonnage (109) par une séquence de mouvements d'une routine d'étalonnage ;
d'enregistrer des paramètres d'étalonnage résultant de l'exécution de ladite séquence d'étalonnage dans le champ magnétique terrestre local ;
et
de transmettre lesdits paramètres d'étalonnage enregistrés à ladite commande de vol (101) dudit véhicule aérien non habité stationné (200), de préférence par un lien de données.

11. Procédé selon la revendication 10, comprenant de déterminer si ledit véhicule aérien non habité (200) est situé dans une distance pré-définie de ladite unité d'étalonnage (100) et d'exécuter un étalonnage dudit compas (110) sans déplacer ledit compas (110) par une séquence de mouvements d'une routine d'étalonnage, comprenant de préférence d'appliquer les paramètres d'étalonnage rapportés audit compas (110) dans ledit véhicule aérien non habité (200).

12. Procédé selon la revendication 10 ou 11, comprenant en outre d'étalonner une unité de mesure inertielle qui fait partie de ladite commande de vol (101), en utilisant une unité de mesure inertielle d'étalonnage qui fait partie de ladite commande de vol d'étalonnage (106) qui est un double de ladite commande de vol (101), pour l'étalonnage simultané par ladite commande d'étalonnage (105) avec ledit compas d'étalonnage (109) .

13. Procédé selon l'une quelconque des revendications 10 à 12, dans lequel déterminer s'il y a un besoin d'étalonnage dudit compas (110) comprend de déterminer la position géographique actuelle de ladite unité d'étalonnage et de comparer ladite position géographique actuelle à la position géographique de la séquence d'étalonnage exécutée en dernier.

14. Procédé selon la revendication 13, comprenant de déterminer la distance géographique entre ladite position géographique actuelle et ladite position géographique de ladite séquence d'étalonnage exécutée en dernier, et de lancer une séquence d'étalonnage lorsque ladite distance géographique dépasse un seuil.

15. Ensemble (300) comprenant une unité d'étalonnage fixe (100) selon l'une quelconque des revendications 1 à 9, et un véhicule aérien non habité (200) ayant une commande de vol (101) comprenant un compas (110).
